# EUROPEAN PATENT SPECIFICATION

(11) **EP 1 650 883 B1**
(45) Date of publication and mention of the grant of the patent: **29.07.2009**
(21) Application number: 05023005.1
(22) Date of filing: 21.10.2005
(51) Int. Cl.: H04B 7/04, H04L 12/28, H04L 12/56

(54) **Method for transmission scheme selection based on the number of antennas and the data rate**
Verfahren zur Auswahl des Übertragungsverfahrens auf der Basis der Antennenanzahl und der Datenrate
Procédé pour la selection d'un schema de transmission basé sur le nombre d'antennes et le débit de données

(30) Priority: 22.10.2004 KR 2004084818
(43) Date of publication of application: 26.04.2006
(73) Proprietor: Samsung Electronics Co., Ltd., Yeongtong-gu Suwon-si, Gyeonggi-do (KR)
(72) Inventor: Oh, Hyun-Seok c/o Samsung Electronics Co., Ltd., Yeongtong-gu Suwon-si Gyeonggi-do (KR); Kim, Sung-Soo c/o Samsung Electronics Co., Ltd., Yeongtong-gu Suwon-si Gyeonggi-do (KR); Kim, Min-Goo c/o Samsung Electronics Co., Ltd., Yeongtong-gu Suwon-si Gyeonggi-do (KR)
(74) Representative: Lang, Johannes

(56) References cited:
- WO-A-20/04030238
- US-A1- 2003 124 976
- MIYANO T ET AL: "Space time coded cooperative relaying technique for multihop communications" VEHICULAR TECHNOLOGY CONFERENCE, 2004. VTC2004-FALL. 2004 IEEE 60TH LOS ANGELES, CA, USA 26-29 SEPT. 2004, PISCATAWAY, NJ, USA,IEEE, 26 September 2004 (2004-09-26), pages 5140-5144, XP010790385 ISBN: 0-7803-8521-7
- AZIMI-SADJADI B ET AL: "Diversity gain for cooperating nodes in multi-hop wireless networks" VEHICULAR TECHNOLOGY CONFERENCE, 2004. VTC2004-FALL. 2004 IEEE 60TH LOS ANGELES, CA, USA 26-29 SEPT. 2004, PISCATAWAY, NJ, USA,IEEE, 26 September 2004 (2004-09-26), pages 1483-1487, XP010786871 ISBN: 0-7803-8521-7

## Description

### BACKGROUND OF THE INVENTION

### Field of the Invention:

The present invention relates to an apparatus and method for transmitting and receiving high-speed packet data in a mobile communication system. More particularly, the present invention relates to an apparatus and method for transmitting and receiving high-speed packet data in a mobile communication system with a plurality of transmitting and receiving antennas.

### Description of the Related Art:

Currently, a mobile communication system is developing into a wireless broadband communication system of greater than 5 GHz to support multimedia services. For example, a wireless local area network (LAN) operates at 24 GHz of an industrial, scientific & medical (ISM) band corresponding to a frequency band capable of being used without a special license. In this case, the performance of a system link level, in other words, the spectral efficiency, requires greater than 10 bits/s/Hz per channel.

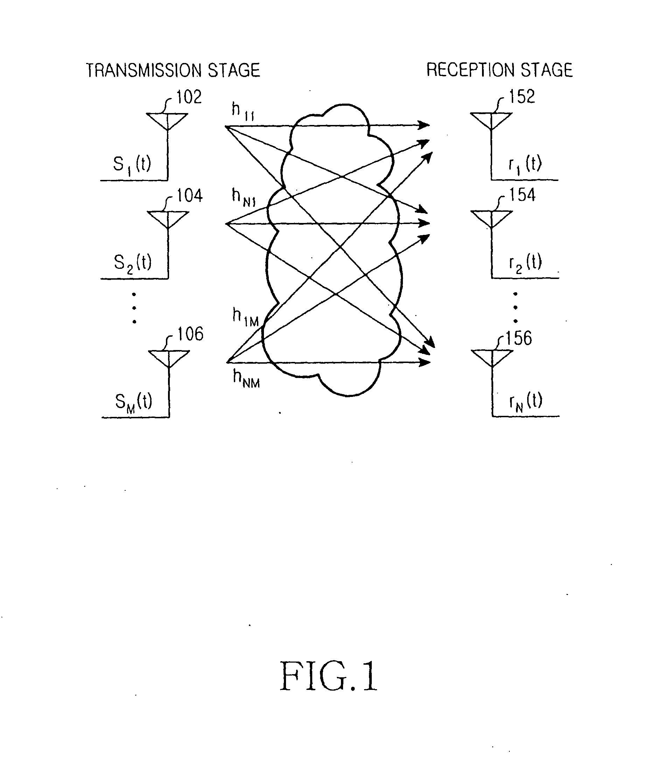

To achieve this, the mobile communication system is based on a proposed multiple-input multiple-output (MIMO) system. The MIMO-based mobile communication system is being considered as a communication system capable of satisfying the spectral efficiency according to high-speed, high- capacity services. A mobile station (MS) is conventionally provided with a single antenna. In this case, there is a problem in that the single antenna cannot be applied to the MIMO system. This problem will be described in detail with reference to FIG. 1.

FIG. 1 is a diagram illustrating a conventional transmission structure using multiple transmitting antennas.

Referring to FIG. 1, the spectral efficiency is improved by using the MIMO system between a base station (BS) (corresponding to a transmitter) and a MS (corresponding to a receiver). When the MIMO system is used for the transmitter/receiver, additional degrees of freedom of the spatial dimension are introduced into the mobile communication system. In relation to the degrees of freedom, the MIMO system provides two space-time processing methods.

In the first method, the reliability of a channel link is improved by using space-time coding. That is, the space-time coding system combats fading by using diversity in a communication channel.

In the second method, spatial multiplexing improves the spectral efficiency. That is, the spatial multiplexing system can simultaneously transmit and receive high-speed data without additionally allocating bandwidth or power.

The conventional MIMO system has a technical limitation in that the number of transmitting antennas of the BS must be less than the number of receiving antennas of the MS. There is a drawback in that the conventional MIMO system is not suitable for high-speed data communication due to the technical limitation associated with the number of transmitting antennas, and may degrade the spectral efficiency and system performance. Transmitted symbols can be detected in low complexity only when the number of receiving antennas is greater than the number of transmitting antennas. This is because the MS at the receiving side uses a conventional nulling and cancelling (NC) detection scheme.

In other words, antennas need to be distinguished in a spatial domain in the MIMO system. For this, independent channel characteristics without any correlation are required. However, it is difficult for the MS to ensure independent channel characteristics between the antennas when the number of receiving antennas is less than the number of transmitting antennas. When the number of receiving antennas is less than the number of transmitting antennas, the performance of the MS is significantly degraded.

For example, when the MIMO system of FIG. 1 uses the spatial multiplexing according to the second method, transmitting antennas 102, 104 and 106 simultaneously transmit different symbols *S*₁*, S*₂*,..., S_{M} .* That is, the transmitting antenna 102 transmits the symbol *S*₁, the transmitting antenna 104 transmits the symbol S₂ and the transmitting antenna 106 transmits the symbol S*_{M}*.

When the number of transmitting antennas is the same as the number of receiving antennas, such as antennas 152, 154 and 156, as illustrated in FIG. 1, a multipath channel linearly operates.

In other words, a problem occurs in implementing the MIMO system technology depending upon sufficient channel dispersion effect when the frequency exceeds 5 GHz. When a frequency band is high, a propagation channel gradually becomes a line-of-sight channel and therefore a correlation level increases. In a non-multipath channel situation, a matrix coefficient of a MIMO channel is set to "1" and the channel has a drawback in that it cannot be actually applied to the spatial multiplexing.

US 2003/124976 shows a MIMO communication system in which a plurality of repeater stations are available between a base station and a mobile station. Each mobile station determines whether or not relaying operation is necessary based on reception power of a pilot signal transmitted from the base station, a measured signal-to-noise-ratio of a pilot signal or a characteristic of path capacity.

The problem of the present invention is to provide a transmission method and apparatus that can increase the communication capacity by grouping a plurality of transmitting and receiving antennas in a communication system with the plurality of transmitting and receiving antennas.

This problem is solved concerning the method by the features of claim 1 and concerning the apparatus by the features of claim 7.

The dependent claims 2 to 6 and 8, 9 apply to very advantageous developments of claim 1 and claim 7.

### BRIEF DESCRIPTION OF THE DRAWINGS

The above and other objects and advantages of the present invention will be more clearly understood from the following detailed description taken in conjunction with the accompanying drawings, in which:
FIG. 1 is a diagram illustrating a conventional transmission structure using multiple transmitting antennas;
FIG. 2 is a diagram illustrating a transmission/reception structure using a relay transmission scheme according to an exemplary embodiment of the present invention;
FIG. 3 is a block diagram illustrating a node structure according to an exemplary embodiment of the present invention;
FIG. 4 is a block illustrating a mobile communication system with a relay network according to an exemplary embodiment of the present invention;
FIG. 5 is a flowchart illustrating the operation of a relay network controller in the system with the relay network of FIG. 4 according to an exemplary embodiment of the present invention;
FIG. 6 is a flowchart illustrating a process for configuring the relay network according to an exemplary embodiment of the present invention;
FIG. 7 is a block diagram illustrating a structure of a transmitter using the relay network according to an exemplary embodiment of the present invention; and
FIG. 8 is a block diagram illustrating a structure of a receiver using the relay network according to an exemplary embodiment of the present invention.

Throughout the drawings, like reference numerals will be understood to refer to like parts, components and structures.

### DETAILED DESCRIPTION OF EXEMPLARY EMBODIMENTS

Operation principles of exemplary embodiments of the present invention will now be described in greater detail with reference to the accompanying drawings. In the following description, detailed descriptions of functions and configurations incorporated herein that are well known to those skilled in the art are omitted for clarity and conciseness. It is to be understood that the phraseology and terminology employed herein are for the purpose of description and should not be regarded as limiting the present invention.

A mobile communication system requires a communication scheme capable of ensuring a high-speed data service. When a multiple-input multiple-output (MIMO) scheme is used for a transmitter/receiver, the data processing capacity in the mobile communication system can be significantly increased.

To address a problem occurring when sufficient data processing capacity cannot be ensured because a matrix coefficient of a MIMO channel is small in a line-of-sight channel environment due to use of the MIMO scheme, an exemplary embodiment of the present invention proposes a method for increasing the matrix coefficient of the MIMO channel using a relay transmission scheme for performing amplification and forwarding operations.

That is, an exemplary embodiment of the present invention extends a service range through a connection between nodes for a base station (BS) (corresponding to a transmitter) and mobile stations (MSs) (corresponding to receivers), thereby increasing internal diversity gain of a relay channel in terms of a physical layer.

When the relay transmission scheme is applied in an exemplary embodiment of the present invention, the most important point is that a MS of an idle state for supporting communication between valid nodes, a node serving as a repeater, and the configuration of a network such as a wireless local area network (LAN), are necessary. In the relay transmission scheme, the node adopts an amplify-and-forward scheme, and can operate at low power because it does not require a special decoding operation and does not use power necessary for signal processing.

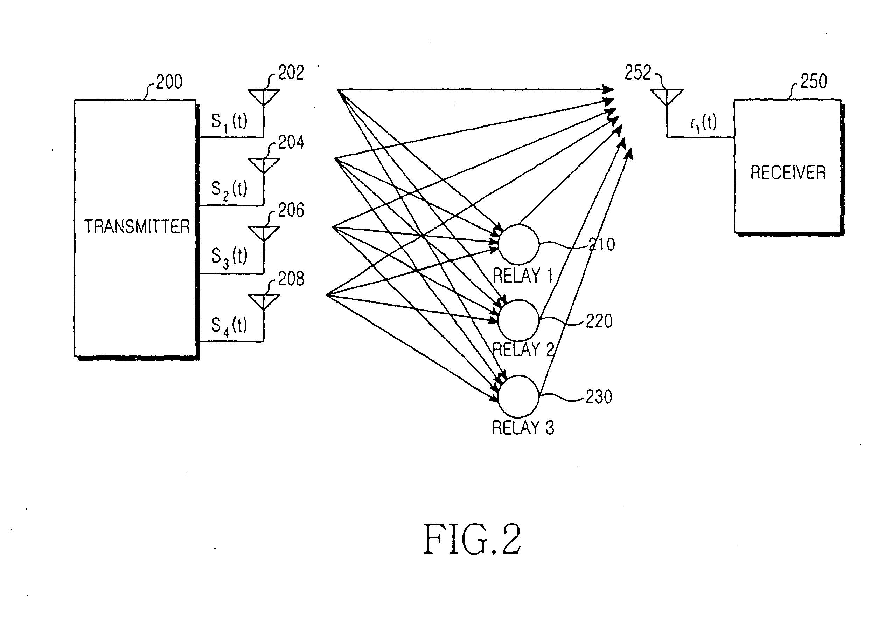

FIG. 2 is a diagram illustrating a transmission/reception structure using a relay transmission scheme according to an exemplary embodiment of the present invention.

Referring to FIG. 2, four types of nodes are a transmitter 200 such as a base station (BS), relay stations 210, 220, and 230, a target station 250, and a direct station 250. Here, the direct station 250 is a MS connected to the BS 200. Possibly, all MSs can perform a relay function for a different MS. That is, each MS can independently communicate with the BS 200 and also can communicate with the relay stations 210, 220, and 230 and other MSs. In this case, it is preferred that the largest number of target stations capable of being simultaneously linked to each relay station is limited.

A direct transmission scheme is a transmission scheme based on a single hop for directly connecting a BS to a MS without passing through any node. On the other hand, the relay transmission scheme is a transmission scheme for linking a node using multiple hops. In this case, when a relay network is configured, the node needs to be configured such that path loss is minimized and a dead spot can be overcome. The node receives information and retransmits the received information to the next node or MS.

Again referring to FIG. 2, data is transmitted from the BS 200 to the MS in the direct transmission scheme when the number of transmitting antennas of the BS 200 is 4 and the number of receiving antennas of the MS is 1. That is, transmitting antennas 202, 204, 206 and 208 of the BS 200 transmit symbols S₁, S_{2,} S₃ and S₄, respectively.

Relay Stations 1, 2, and 3 corresponding to the nodes use the relay transmission scheme. That is, the BS 200 transmits the symbol *S*₁, to Relay Station-1 210 through the transmitting antenna 202, transmits the symbol *S*₂ to Relay Station-1 210 through the transmitting antenna 204, transmits the symbol S₃ to Relay Station-1 210 through the transmitting antenna 206, and transmits the symbol *S*₄ to Relay Station-1 210 through the transmitting antenna 208. These operations of the BS 200 repeat for Relay Station-2 220 and Relay Station-3230.

The MS 250 is provided with a single receiving antenna 252, but can obtain the effect of virtually using four receiving antennas. That is, it can be found that a channel matrix coefficient is increased from "1" to "4".

As described above, the relay transmission scheme is configured through a virtual antenna array, and its channel capacity is the same as that of a conventional MIMO channel. A network supporting the relay transmission scheme ensures the system performance by considering the number of transmitting antennas and the number of receiving antennas as in the following cases.
Case 1. Number of Transmitting Antennas > Number of Receiving Antennas: When the number of transmitting antennas exceeds the number of ) receiving antennas, a channel capacity curve is quickly saturated. The use of multiple nodes can lead to a waste of resources.
Case 2. Number of Transmitting Antennas < Number of Receiving Antennas: When the number of transmitting antennas is fixed and the number of receiving antennas is increased, the capacity curve increases algebraically. Accordingly, receive diversity gain can be sufficiently obtained due to the increased number of receiving antennas.
Case 3. Number of Transmitting Antennas = Number of Receiving Antennas: When the number of transmitting antennas and the number of receiving antennas are increased equally, the channel capacity curve also increases linearly.

That is, the relay network considers an increase in a channel matrix coefficient and a waste of resources according to the number of transmitting antennas and the number of receiving antennas, increases a rate of data capable of being transmitted, and supports a high-speed data service.

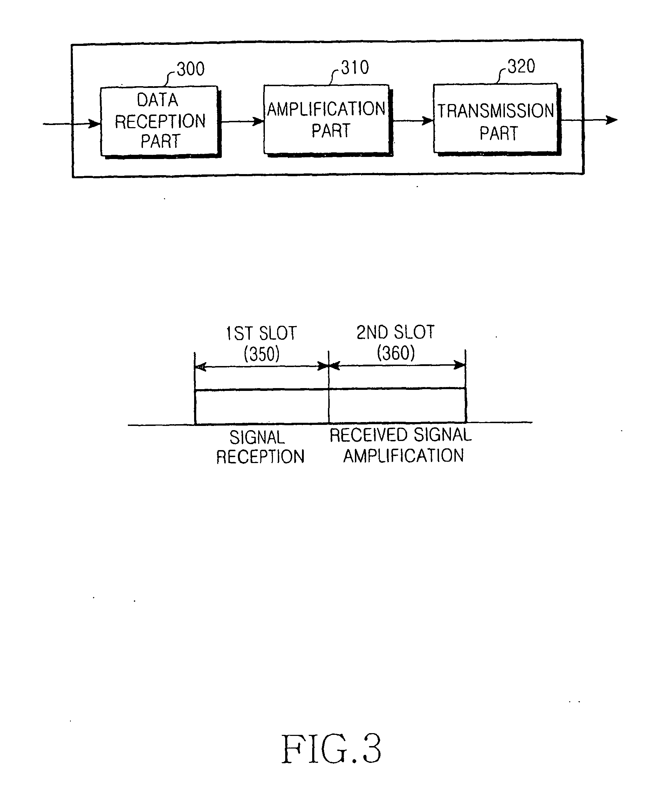

FIG. 3 is a block diagram illustrating a node structure according to an exemplary embodiment of the present invention.

Nodes can be classified into one or more idle nodes for supporting retransmission of a received signal in MSs of an active state and special relays for relaying signals transmitted from the transmitter of FIG. 2. A MS can perform a node function to retransmit the received signal, and can be established as a special relay station.

Referring to FIG. 3, a node is provided with a data reception part 300, an amplification part 310, and a transmission part 320.

The reception part 300 receives data transmitted from the transmitter. The amplification part 310 amplifies a received signal to allow the receiver to ensure the transmitted data. The transmission part 320 transmits the amplified signal. The transmission part 320 is provided with one transmitting antenna for transmitting the signal. The transmitting antenna is an omni-directional antenna. That is, the node is provided with the amplification part 310 for performing amplification and forwarding operations. The amplification and forwarding operations can be performed at low consumption power. The node can operate using direct mode of a wireless LAN or high-performance LAN type 2 (HiperLAN2).

For example, in a system of M transmitting antennas, N receiving antennas, and R nodes, the R nodes increase a channel matrix coefficient such that a data rate or quality of service (QoS) desired by the receiver can be ensured.

As illustrated in FIG. 3, the node receives data in a first time slot 350, and amplifies and transmits a received analog signal in a second time slot 360.

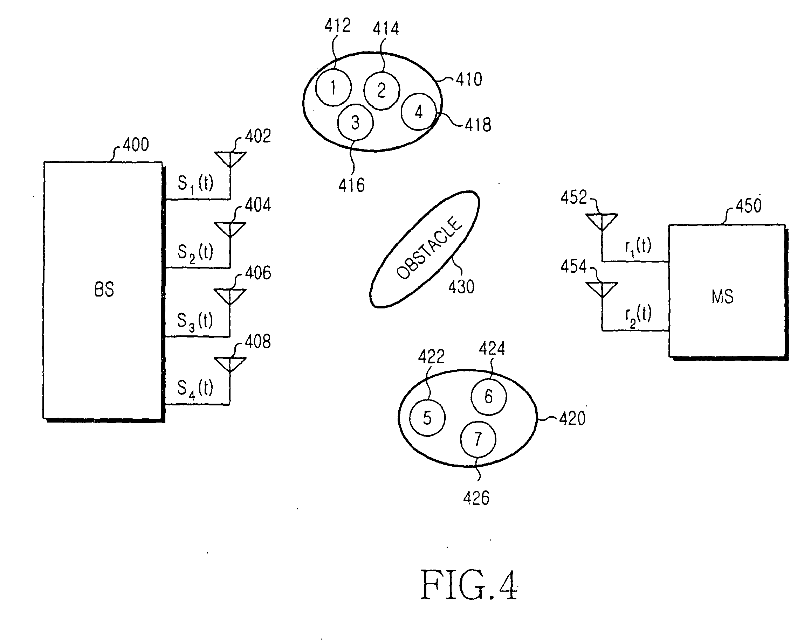

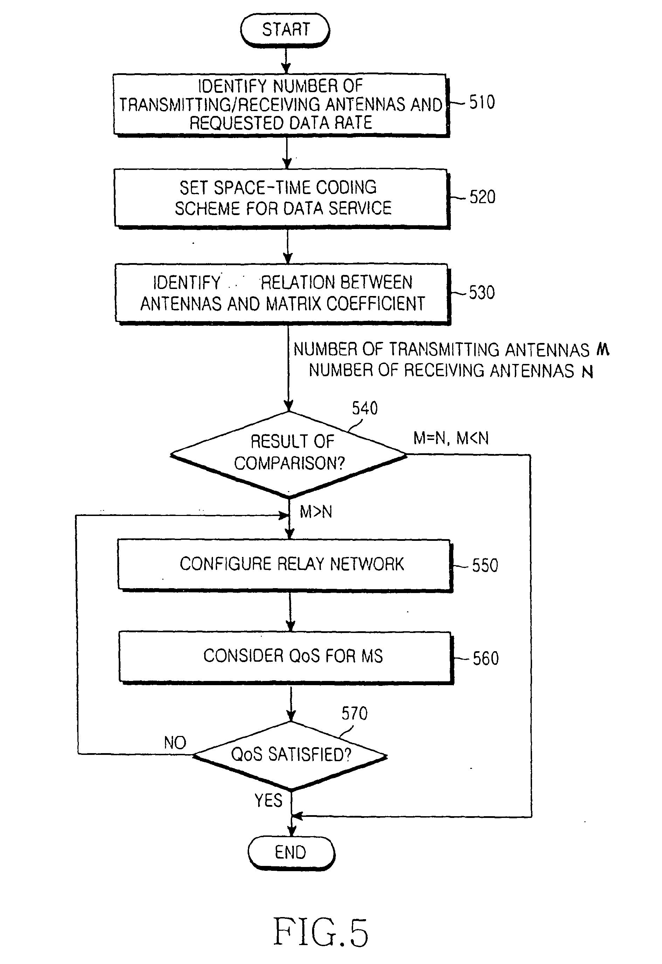

FIG. 4 is a diagram illustrating a mobile communication system with a relay network according to an exemplary embodiment of the present invention, and FIG. 5 is a flowchart illustrating the operation of a relay network controller in the system with the relay network of FIG. 4 according to an exemplary embodiment of the present invention.

Referring to FIGS. 4 and 5, a BS 400 is provided with four transmitting antennas 402, 404, 406 and 408, and a MS 450 is provided with two receiving antennas 452 and 454. In this case, the BS 400 can transmit different data through the four transmitting antennas, and the MS 450 supports a high-speed data service.

In step 510, the BS 400 identifies the four transmitting antennas 402, 404, 406 and 408 provided in its own node, the number of receiving antennas 452 and 454 of the MS 450, and a data rate. In step 520, the BS 400 identifies a data transmission rate for the MS 450 and selects the direct transmission scheme or the relay transmission scheme for the data service. According to the selected transmission scheme, a coding scheme is determined.

If the MS 450 supports the high-speed data service, it uses a multiple-input multiple-output (MIMO), Bell Laboratories Layered Space-Time (BLAST), Per Antenna Rate Control (PARC), or Per Stream Rate Control (PSRC) scheme. When the MS 450 is a low-speed terminal, it uses a Space-Time Transmit Diversity (STTD), double STTD (D-STTD), or antenna selection scheme. That is, when the MS 450 requests a low-rate data service, it prefers the direct transmission scheme rather than the relay transmission scheme according to an exemplary embodiment of the present invention.

On the other hand, when the MS 450 is a high-speed terminal, the BS 400 uses space-time block coding for the transmitting antennas, or selects and turns on two antennas with better channel performance and turns off the remaining two antennas.

When the relay transmission scheme is applied, the BS 400 must consider the followings.

Consideration 1. When a large number of nodes are concentrated, the channel capacity of the relay transmission scheme is less than that of the direct transmission scheme.

Consideration 2. The relay transmission scheme must transmit data using additional nodes to increase a total data rate in a system level.

Consideration 3. When the number of nodes in the relay transmission scheme is greater than that in the direct transmission scheme, a sufficient Signal to Interference plus Noise Ratio (SINR) must be ensured which corresponds to the increased number of nodes.

In step 530, when the BS 400 and the MS 450 have a high correlation level between receiving antennas in the line-of-sight situation, the BS 400 considers the correlation between the receiving antennas and selects the relay transmission scheme. When the path loss is high because a geographic distance between the BS 400 and the MS 450 is far, the relay transmission scheme can be selected. When a channel matrix is small according to the number of receiving antennas of the MS 450, the relay transmission scheme can be selected.

For example, the relay transmission scheme using nodes may be required even when the number of receiving antennas of the MS 450 is equal to or greater than the number of transmitting antennas of the BS 400. When the MS is located in a dead spot due to an obstacle 430, the relay transmission scheme is required. Node groups 410 and 420 can be formed by HiperLAN2, a wireless LAN, or a group of personal terminals.

In step 540, the BS 400 compares the number of transmitting antennas with the number of receiving antennas of the MS 450, or considers QOS to select the relay transmission scheme. In this case, it is assumed that the number of transmitting antennas is equal to M and the number of receiving antennas is equal to N. When M > N, the BS 400 proceeds to step 550 to configure a relay network and transmit data through the relay network. On the other hand, when M ≤ N, the BS 400 ends the process. In an exemplary implementation of the present invention, the relay transmission scheme is required because the number of transmitting antennas, i.e., 4, is greater than the number of receiving antennas, i.e., 2, and the MS 450 requests the high-speed data service.

In step 560, the BS establishes a MS group, HiperLAN2, or wireless LAN as a node group when the relay transmission scheme is selected. Then, a group to be actually used is selected from established node groups. That is, when Node Group-1 410 is selected in FIG. 4, a node to be used is selected from Node-1 412, Node-2 414, Node-3 416, and Node-4 418 within the group. On the other hand, when Node Group-2 420 is selected, a node to be used is selected from Node-5 422, Node-6 424, and Node-7 426.

In step 570, a determination is made as to whether QoS for the MS can be satisfied when data is transmitted through the selected node according to the relay transmission scheme. If the selected node satisfies the QoS for the MS in step 570, the node is maintained and data transmission between the BS and the MS is initiated. However, if the QoS is not satisfied, a relay network capable of satisfying the QoS is searched for.

As described above, the advantages of the relay transmission scheme are summarized as follows.

The high-speed data service is easily provided regardless of the number of transmitting/receiving antennas. A range of supporting the high-speed data service is extended. Transmission power of the BS is reduced. A dead spot and an ad-hoc network can be overcome. When the high-speed data service is provided to the MS located at a long distance, the path loss is reduced.

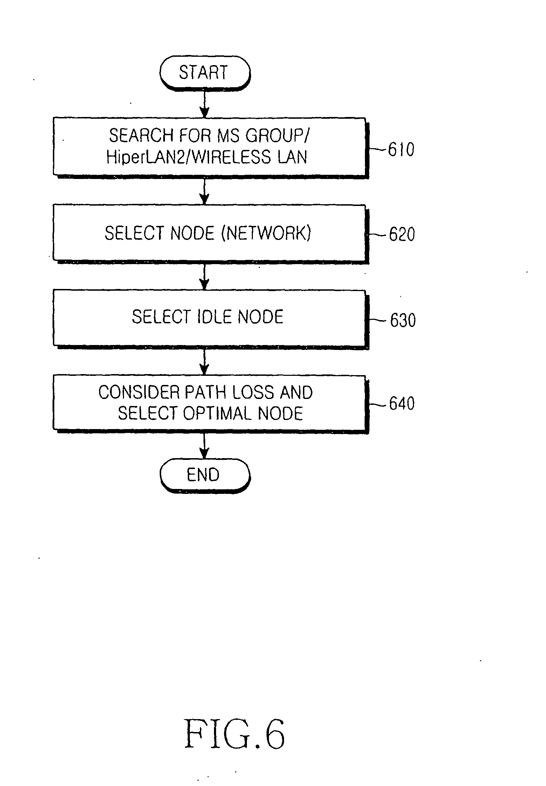

FIG. 6 is a flowchart illustrating a process for configuring the relay network according to an exemplary embodiment of the present invention.

Referring to FIG. 6, the BS determines if a MS group adjacent to a MS receiving high-speed data is present when considering the number of transmitting antennas and the number of receiving antennas, in other words, a correlation between the receiving and transmitting antennas, and selecting the relay transmission scheme in step 610. If an adjacent MS group is absent, a determination is made as to whether a relay node group is present, or as to whether a MS group of the idle state is present. If a node group for selecting a node is present in step 620, a node of the idle state is selected from the node group in step 630. In step 640, the BS selects an optimal path to establish a relay network such that path loss can be minimized.

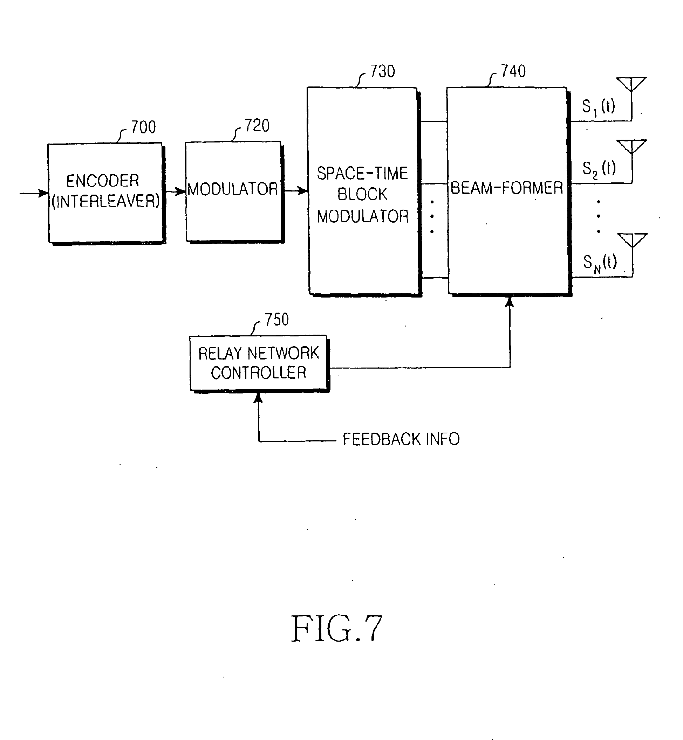

FIG. 7 is a block diagram illustrating a structure of a transmitter using the relay network according to an exemplary embodiment of the present invention.

Referring to FIG. 7, an encoder 700 of the transmitter performs space-time or space-frequency block coding on a data stream on the basis of a feedback channel quality indicator (CQI). A modulator 720 of the transmitter establishes a modulation scheme suitable for each antenna such that transmitting antennas provide sufficient channel dispersion effect, and performs a modulation operation according the modulation scheme. When the modulation scheme is established, the modulation operation and a weight value for the transmitting antennas are controlled in response to a control signal applied from a relay network controller 750 such that the relay transmission scheme is used.

That is, the transmitter must consider the followings. A space-time modulator 730 of the transmitter determines whether to perform the space-time block coding for the transmitting antennas according to reception performance of a receiving antenna of a MS and the number of antennas, and performs the space-time block coding according to the determining result. A beam-former 740 of the transmitter computes weight values of antennas in order to beam forming to a target station, determines whether to apply the weight values to each antenna, and performs a beam-forming according the weight values. That is, the transmitter considers an SINR of N transmitting antennas and the number of receiving antennas, and controls the modulation operation (of the modulator 730) and the weight value (of the beam-former 740) for data to be transmitted through the transmitting antennas.

The transmitter controls a signal to be transmitted to satisfy QoS requested by the MS (or receiver) through the relay network controller 750. For example, it is assumed that the MS requests the high-speed data service and each antenna needs to transmit independent data. In this case, accurate data cannot be detected because a channel matrix coefficient is less than the number of transmitting antennas if the number of receiving antennas is less than the number of transmitting antennas and performance degradation of a reception system is severe. Accordingly, the relay transmission scheme is seriously required.

Therefore, the transmitter considers the number of receiving antennas of the MS (or receiver), a requested data rate, or a correlation between transmitting and receiving antennas through the relay network controller 750, and provides the relay transmission scheme. This plays a role in increasing the number of receiving antennas of the MS.

In other words, the relay network controller 750 transmits data in a direct transmission scheme using feedback information or controls an indirect transmission scheme in which a matrix coefficient of the MS is set to be equal to the number of transmitting antennas. In this case, the feedback information can comprise information about a geographic distance between transmitting and receiving antennas.

Now, the operation of the relay network controller 750 will be described in greater detail.

Operation 1. Active management for a relay network based on the number of transmitting/receiving antennas: The relay network controller 750 identifies the number of receiving antennas, and determines how many nodes are used to transmit data through a path. In this case, the relay network controller 750 must identify an increase value in a channel matrix coefficient through the relay network. It should be noted that performance degradation of a reception system is severe when the number of receiving antennas is less than the number of transmitting antennas.

Operation 2. Coding scheme selection based on the number of transmitting/receiving antennas: For example, when the number of antennas of the BS is equal to 4 and the number of receiving antennas is equal to 2, antennas of a BS are combined two by two and space-time coding can be performed. When sufficient coding gain and diversity gain can be obtained in the MS (or receiver), the space-time coding is performed.

Operation 3. Transmitting antenna on/off setup based on the number of transmitting/receiving antennas: When the number of transmitting antennas is greater than the number of receiving antennas and the direct transmission scheme is preferred, transmitting antennas, corresponding to the number of receiving antennas, in a better channel state are selectively turned on. The remaining transmitting antennas are turned off.

Operation 4. Consideration of a data rate (or the number of users) in a cell: A data rate or the number of users must be considered such that the relay network is configured. As the data rate is high, the link load increases. Because transmission power increases due to mutual interference, the number of users in the cell is uniformly maintained or the data rate needs to be limited to a predetermined level.

Operation 5. Consideration of path loss: As a broadband frequency is supported, a path loss reduction ratio capable of being achieved in the mobile communication system is measured. That is, the path loss reduction ratio due to the relay transmission scheme is normalized between 0 and 1 with respect to the total path loss. As compared with a case without use of a relay network, the path loss reduction ratio based on the relay network control is approximately 30%. In other words, a total transmission data rate is increased due to the path loss occurring in the direct transmission scheme and the node retransmits a signal transmitted to the BS or target station, such that the path loss is relatively low.

However, the relay network transmits independently generated data as well as information to be relayed. That is, additional data for the target station is generated.

Operation 6. Consideration of transmission power: Transmission power in a power-controlled system can be further reduced through the relay network controller. In a power-controlled code division multiple access (CDMA) system, the transmission power is determined by two major measurement coefficients with respect to an actual transmission power reduction ratio. The first measurement coefficient is reception power corresponding to the sensitivity of a receiver. In other words, the reception power indicates an intensity of transmission power capable of overcoming the path loss and is expressed by transmission power based on the path loss.

In relation to the second measurement coefficient, transmission power must be increased according to the multiple access interference such that a sufficient SINR can be ensured in a detector of the receiver. This is because the interference in the mobile communication system is affected by network load. Therefore, power control is performed such that interference noise can be automatically reduced.

Operation 7. Orthogonal resource allocation of a node: The node must allocate orthogonal resources to transmission and reception paths. For example, when data is transmitted and received, a scheme for allocating different time slots, a scheme for allocating different frequency bands, and so on are used. If an orthogonal frequency division multiplexing (OFDM) scheme is applied, orthogonal subcarriers need to be allocated to suitable transmission and reception paths. A store-and-forward scheme such as the time slot allocation scheme is suitable for packet data communication because it is not sensitive to time delay. The scheme for allocating different frequencies to the transmission and reception paths is useful when successive transmissions are required.

However, the node requires different frequencies to be allocated for reception and transmission. These transmission and reception resources are a total of four frequencies because the transmission and reception require two carriers, respectively. Like a communication path setup scheme, the carrier allocation scheme sequentially allocates frequencies on the basis of path loss such that the above-described conditions can be satisfied.

Operation 8. Points to be considered in the carrier allocation scheme: The node uses different frequencies between transmission and reception and must be able to avoid mutual interference. It is preferred that one pair of carriers is uniformly used to prevent load imbalance.

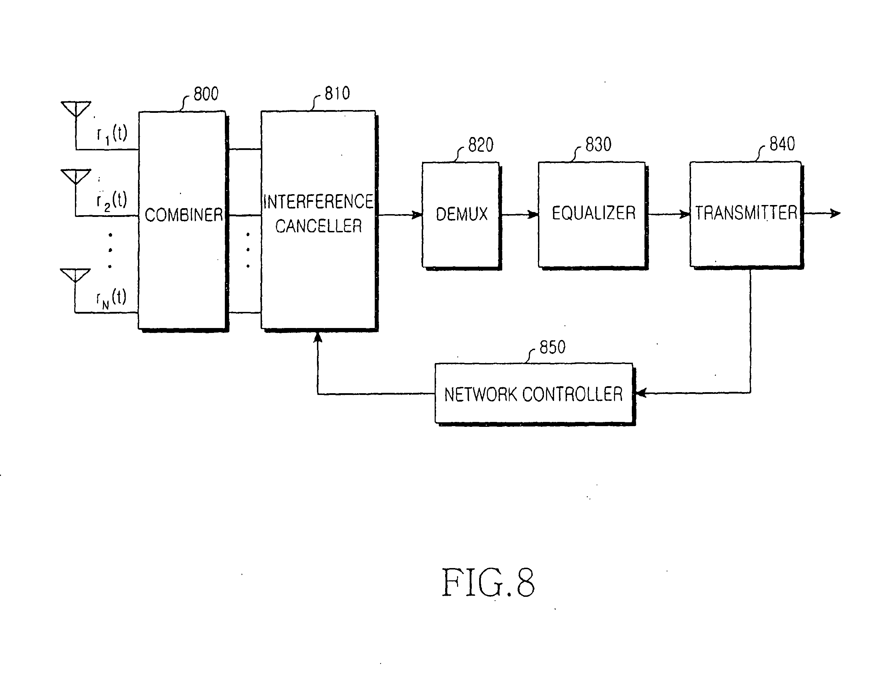

FIG. 8 is a block diagram illustrating a structure of a receiver using the relay network according to an exemplary embodiment of the present invention.

Referring to FIG. 8, a combiner 800 soft-combines data of the first time slot and data of the second time slot retransmitted through a node. An interference canceller 810 removes a guard interval inserted to prevent signal interference from signals output by the combiner 800. A demultiplexer 820 demultiplexes a data symbol from which interference has been removed, and outputs a result of the demultiplexing to an equalizer 830. The equalizer 830 detects a channel state of output data, performs correction in a suitable frequency band, and performs an output operation. An output signal of the equalizer 830 is transmitted through a transmitter 840.

Moreover, the output signal is applied to a network controller 850. The network controller 850 detects a signal output from the transmitter 840 and

determines if transmission and reception in the direct transmission scheme are sufficient or if the relay transmission scheme is required. If the transmission and reception in the direct transmission scheme are enabled, a determination is made as to whether transmitting antennas will be totally or partially used or a determination is made as to whether space-time coding will be applied for the transmitting antennas according to the direct transmission scheme.

On the other hand, if the relay transmission scheme is required, a node group such as a MS group, wireless LAN, or HiperLAN2 adjacent to the MS is searched for. A node with the minimum path loss and an optimal path are searched for, such that data is transmitted to the searched node and optimal path. In this case, the network controller considers a method for transmission and reception in a node, a method for synchronization between nodes, a method for searching for an optimal path, and a method for selecting a node for reducing transmission power when the relay transmission scheme is applied.

The present invention can significantly increase the capacity of a channel link and the capacity of a system regardless of the number of receiving antennas of a mobile station (MS). Moreover, the present invention can increase a multiple-input multiple-output (MIMO) channel matrix coefficient through linlcage between nodes and provide a high-speed service according to an increase in the channel matrix coefficient. Moreover, the present invention can extend a service communication area and reduce total transmission power of a network. Moreover, the present invention can significantly reduce path loss of a radio channel.

## Claims

1. A method for supporting high-speed data for a mobile station (MS) in a mobile communication system comprising a base station (BS) with a plurality of transmitting antennas (M) and the MS with a plurality of receiving antennas (N), comprising the steps of:
identifying a relation (530) between the number of transmitting antennas and the number of receiving antennas using feedback information in the BS and determining whether to establish a relay transmission scheme based thereon (540);
when the number of transmitting antennas (M) is greater than the number of receiving antennas (N), determining if quality of service for the MS is satisfied (560) when data is transmitted according to the established relay transmission scheme (550); and
transmitting the high-speed data through a specific node group (410, 420) adjacent to the MS when the quality of service for the MS is not satisfied (570).

2. The method of claim 1, wherein the feedback information comprises information about the number of receiving antennas.

3. The method of claim 1, wherein the feedback information comprises information about a data rate requested between the MS located in a cell of the BS and another adjacent MS thereto.

4. The method of claim 1, wherein the feedback information comprises information about a geographic distance between the BS and the MS.

5. The method of claim 1, wherein the feedback information comprises information about a signal to noise ratio associated with the transmitting antennas of the BS.

6. The method of claim 1, wherein the step of transmitting the high-speed data through the specific node group adjacent to the MS comprises the steps of:
searching for a node group (410, 420) with a minimum path loss from at least one node group in the BS;
selecting nodes operating in an idle state from the at least searched node group; and
transmitting the high-speed data through a node with a minimum path loss among the nodes operating in the idle state.

7. A transmitter (200) for supporting high-speed data for a mobile station (MS) in a mobile communication system comprising a base station (BS) with a plurality of transmitting antennas (M), the MS with a plurality of receiving antennas (N) and a relay network (210, 220, 230; 410, 420), comprising:
a relay network controller (750) for identifying a relation between the number of transmitting antennas (M) and the number of receiving antennas (N) using feedback information and determining whether to establish a relay transmission scheme based thereon;
an encoder (700) for considering the number of receiving antennas (N) and performing space-time coding when the number of transmitting antennas (M) is greater than the number of receiving antennas in response to a control signal of the relay network controller (750); and
a beam-former (740) for applying weight values to ensure channel performance of a receiving antenna of the MS in response to a control signal of the relay network controller (750) such that quality of service for the MS is satisfied.

8. The transmitter of claim 7, wherein the relay network (210, 220, 230; 410, 420) is established when the M transmitting antennas are greater than the N receiving antennas.

9. The transmitter of claim 7, wherein the relay network (210, 220, 230; 410, 420) is established when a matrix coefficient of a channel to be transmitted through the M transmitting antennas is equal to 1.

## Patentansprüche

1. Verfahren zum Unterstützen von Hochgeschwindigkeitsdaten für eine Mobilstation (MS) in einem Mobilkommunikationssystem, das eine Basisstation (BS) mit einer Mehrzahl von Übertragungsantennen (M) und die MS mit einer Mehrzahl von Empfangsantennen (N) aufweist, aufweisend die Schritte:
Identifizieren einer Beziehung (530) zwischen der Anzahl von Übertragungsantennen und der Anzahl von Empfangsantennen unter Verwendung von Rückkopplungsinformation in der Basisstation und Bestimmen, ob ein darauf basierender Relais-Übertragungsplan erstellt wird (540);
wenn die Anzahl der Übertragungsantennen (M) größer als die Anzahl der Empfangsantennen (N) ist, Bestimmen, falls die Dienstqualität für die MS ausreicht (560), wenn Daten gemäß des erstellten Relais-Übertragungsplans übertragen wurden (550); und
Übertragen der Hochgeschwindigkeitsdaten durch eine an die MS angrenzende spezifische Knotengruppe (410, 420), wenn die Dienstqualität für die MS nicht ausreicht (570).

2. Verfahren nach Anspruch 1, wobei die Rückkopplungsinformation Information über die Anzahl der Empfangsantennen aufweist.

3. Verfahren nach Anspruch 1, wobei die Rückkopplungsinformation Information über eine Datenrate, die zwischen der MS, die in einer Zelle der BS angeordnet ist, und einer anderen angrenzenden MS dazu erforderlich ist.

4. Verfahren nach Anspruch 1, wobei die Rückkopplungsinformation Information über eine geografische Distanz zwischen der BS und der MS aufweist.

5. Verfahren nach Anspruch 1, wobei die Rückkopplungsinformation Information über einen mit den Übertragungsantennen der BS assoziierten Rauschabstand aufweist.

6. Verfahren nach Anspruch 1, wobei der Schritt des Übertragens der Hochgeschwindigkeitsdaten durch die an die MS angrenzende spezifische Knotengruppe die Schritte aufweist:
Suchen nach einer Knotengruppe (410, 420) mit einem minimalen Wegeverlust aus der mindestens einen Knotengruppe in der BS;
Auswählen von in einem Ruhezustand betriebenen Knoten aus der mindestens gesuchten Knotengruppe; und
Übertragen der Hochgeschwindigkeitsdaten durch einen Knoten mit einem minimalen Wegeverlust aus den in dem Ruhezustand betrieben Knoten.

7. Übertrager (200) zum Unterstützen von Hochgeschwindigkeitsdaten für eine Mobilstation (MS) in einem Mobilkommunikationssystem, das eine Basisstation (BS) mit einer Mehrzahl von Übertragungsantennen (M), die Mobilstation mit einer Mehrzahl von Empfangsantennen (N) und ein Relais-Netzwerk (210, 220, 230; 410, 420) aufweist, aufweisend:
eine Relais-Netzwerksteuerung (750) zum Identifizieren einer Beziehung zwischen der Anzahl von Übertragungsantennen (M) und der Anzahl von Empfangsantennen (N) unter Verwendung von Rückkopplungsinformation und Bestimmen, ob ein darauf basierender Relais-Übertragungsplan zu erstellen ist;
ein Kodierer (700) zum Berücksichtigen der Anzahl von Empfangsantennen (N) und Durchrühren von Raum-Zeit-Kodienmg, wenn die Anzahl der Übertragungsantennen (M) größer als die Anzahl der Empfangsantennen ist in Reaktion auf ein Steuersignal der Relais-Netzwerksteuerung (750); und
ein Strahlenbilder (740) zum Anwenden von Gewichtungswerten, um eine Kanalleistung einer Empfangsantenne der MS sicherzustellen in Reaktion auf ein Steuersignal der Relais-Netzwerksteuerung (750), so dass die Dienstqualität für die MS ausreicht.

8. Übertrager nach Anspruch 7, wobei das Relais-Netzwerk (210, 220, 230; 410, 420) erstellt wird, wenn die M Übertragungsantennen mehr als die N Empfangsantennen sind.

9. Übertrager nach Anspruch 7, wobei das Relais-Netzwerk (210, 220, 230; 410, 420) erstellt wird, wenn ein Matrixkoeffizient eines durch die M Übertragungsantennen zu übertragenden Kanals gleich 1 ist.

## Revendications

1. Procédé pour permettre la prise en charge de données à haut débit pour une station mobile (MS) dans un système de communication mobile comprenant une station de base (BS) avec plusieurs antennes d'émissions (M) et la MS avec plusieurs antennes de réception (N), comprenant les étapes consistant à:
identifier une relation (530) entre le nombre d'antennes d'émission et le nombre d'antennes de réception en utilisant des informations de retour dans la BS et déterminer s'il faut établir un schéma de transmission relais fondé sur celle-ci (540);
lorsque le nombre d'antennes d'émission (M) est supérieur au nombre d'antennes de réception (N), déterminer si on répond à la qualité de service pour la MS lorsque des données sont transmises selon le schéma de transmission relais (550) établi; et émettre les données à haut débit par l'intermédiaire d'un groupe (410, 420) de noeuds spécifiques adjacent à la MS lorsqu'on ne répond pas (570) à la qualité de service pour la MS.

2. Procédé de la revendication 1, dans lequel les informations de retour comprennent des informations concernant le nombre d'antennes de réception.

3. Procédé de la revendication 1, dans lequel les informations de retour comprennent des informations concernant un débit de données demandé entre la MS située dans une cellule de la BS et une autre MS qui lui est adjacente.

4. Procédé de la revendication 1, dans lequel les informations de retour comprennent des informations concernant une distance géographique entre la BS et la MS.

5. Procédé de la revendication 1, dans lequel les informations de retour comprennent des informations concernant un rapport signal/bruit associé aux antennes d'émission de la BS.

6. Procédé de la revendication 1, dans lequel l'étape d'émission des données à haut débit par l'intermédiaire du groupe de noeuds spécifiques adjacent à la MS comprend les étapes consistant à:
rechercher un groupe (410, 420) de noeuds ayant un affaiblissement de la propagation minimal par rapport à un groupe de noeuds au moins dans la BS;
sélectionner des noeuds fonctionnant dans un état de repos par rapport au groupe de noeuds recherché au moins; et
émettre les données à haut débit à travers un noeud avec un affaiblissement de la propagation minimal parmi les noeuds fonctionnant dans l'état de repos.

7. Emetteur (200) pour permettre la prise en charge de données à haut débit pour uns station mobile (MS) dans un système de communication mobile comprenant une station de base (BS) avec plusieurs antennes d'émission (M), la MS avec plusieurs antennes de réception (N) et un réseau relais (210, 220, 230; 410, 420), comprenant:
une unité de commande (750) du réseau relais pour identifier une relation entre le nombre d'antennes d'émission (M) et le nombre d'antennes de réception (N) en utilisant des informations de retour et déterminer s'il faut établir un schéma de transmission relais fondé sur celle-ci;
un encodeur (700) pour considérer le nombre d'antennes de réception (N) et exécuter un codage spatio-temporel lorsque le nombre d'antennes d'émission (M) est supérieur au nombre d'antennes de réception en réponse à un signal de commande de l'unité de commande (750) du réseau relais; et
un formateur (740) de faisceaux pour appliquer des valeurs de pondération afin de garantir la performance de canal d'une antenne de réception de la MS en réponse à un signal de commande de l'unité de commande (750) du réseau relais de sorte à répondre à la qualité de service pour la MS.

8. Emetteur de la revendication 7, dans lequel le réseau relais (210, 220, 230; 410, 420) est établi lorsque les M antennes d'émission sont plus nombreuses que les N antennes de réception.

9. Emetteur de la revendication 7, dans lequel le réseau relais (210, 220, 230; 410, 420) est établi lorsqu'un coefficient matriciel d'un canal à émettre par l'intermédiaire des M antennes d'émission est égal à 1.
